# EUROPÄISCHE PATENTANMELDUNG

(11) **EP 3 686 076 A1**
(43) Veröffentlichungstag der Anmeldung: **29.07.2020**
(21) Anmeldenummer: 20153027.6
(22) Anmeldetag: 22.01.2020
(51) Int. Cl.: B61C 9/50, F16H 57/00

(54) **GETRIEBEGEHÄUSE UND ANORDNUNG ZUR ABSTÜTZUNG EINES GETRIEBES**

(30) Priorität: 23.01.2019 DE 102019200769
(71) Anmelder: ZF Friedrichshafen AG, 88046 Friedrichshafen (DE)
(72) Erfinder: Holder, Kevin, 88046 Friedrichshafen (DE); Guerra, Fabio, 88048 Friedrichshafen (DE); Rapp, Simon, 88250 Weingarten (DE)
(74) Vertreter: ZF Friedrichshafen AG

(57) **Zusammenfassung**

Die Erfindung betrifft ein Getriebegehäuse (5) eines Getriebes (1) für ein Schienenfahrzeug, wobei das Getriebegehäuse (5) mittels einer Drehmomentstütze (4) am Schienenfahrzeug, insbesondere an einem Drehgestell des Schienenfahrzeuges abstützbar ist.

Es wird vorgeschlagen, dass an dem Getriebegehäuse (5) ein Adapterelement (6) befestigt ist, welches an der Drehmomentstütze (4) anlenkbar ist.

## Beschreibung

Die Erfindung betrifft ein Getriebegehäuse eines Getriebes für ein Schienenfahrzeug nach dem Oberbegriff des Patentanspruches 1 sowie eine Anordnung zur Abstützung eines Getriebes im Drehgestell eines Schienenfahrzeuges nach dem Oberbegriff des Patentanspruches 14.

Durch die DE 92 14 104 U wurde eine Aufhängung eines Fahrmotor-Getriebeblocks, bestehend aus einem Fahrmotor und einem Getriebekasten, in einem Drehgestell von Schienenfahrzeugen bekannt. Dabei ist der Getriebekasten über ein gummigelagertes Pendel (Pendelstütze) gegenüber dem Drehgestell abgestützt. Das Pendel, auch Drehmomentstütze genannt, ist einerseits gelenkig am Kopfträger des Drehgestells und andererseits an einem Ausleger, welcher Teil des Getriebekastens ist, gelenkig befestigt, d.h. angelenkt und stützt somit das Reaktionsmoment des Getriebes ab. Ein Problem bei der Anordnung eines Getriebes im Drehgestell von Schienenfahrzeugen besteht darin, dass die Anschlussmaße oder Schnittstellen für das Getriebe am Drehgestell variieren, während die Abmessungen des Getriebes im Wesentlichen die gleichen bleiben. Insofern muss bei jedem neuen Getriebe ein an die geänderten Schnittstellen oder Anschlussmaße angepasstes Getriebegehäuse hergestellt werden, welches in der Regel als Gussteil ausgebildet ist und zusätzliche Kosten verursacht.

Eine Aufgabe der Erfindung besteht darin, ein Getriebe für Schienenfahrzeuge derart auszubilden, dass es kostengünstig in dem Schienenfahrzeug, insbesondere an einem Drehgestell angeordnet werden kann.

Die Erfindung umfasst die Merkmale der unabhängigen Patentansprüche 1 und 14. Vorteilhafte Ausgestaltungen ergeben sich aus den Unteransprüchen.

Nach einem ersten Aspekt der Erfindung ist bei einem Getriebegehäuse eines Getriebes für Schienenfahrzeuge vorgesehen, dass an dem Getriebegehäuse ein Adapterelement befestigt ist, welches an der Drehmomentstütze angelenkt ist, um das Getriebe respektive das Getriebegehäuse gegenüber dem Schienenfahrzeug, insbesondere einem Drehgestell abzustützen. Das Getriebe, welches mit einem Antriebsmoment durch den Fahrmotor und einem Abtriebsmoment zum Antrieb einer Achswelle beaufschlagt wird, ist mit einem Reaktionsmoment belastet, welches über das Getriebegehäuse gegenüber dem Drehgestell abgestützt werden muss, was insbesondere durch eine Drehmomentstütze erfolgt. Eine solche Drehmomentstütze ist an dem Adapterelement - und nicht wie beim Stand der Technik am Getriebegehäuse selbst - angelenkt. Durch die Verwendung eines Adapterelementes können unterschiedliche Anschlussmaße oder Schnittstellen im Schienenfahrzeug, insbesondere im Drehgestell bei gleichen Getrieben kostengünstig ausgeglichen werden. Es kann somit das gleiche Getriebegehäuse für unterschiedliche Anwendungen benutzt werden, wobei ein geänderter Abstand zwischen den Getriebewellen und der Drehmomentstütze durch das Adapterelement überbrückt wird.

Nach einer bevorzugten Ausführungsform weist das Adapterelement zwei nebeneinander angeordnete Lagerstellen auf, welche mit der Drehmomentstütze verbunden werden. Über diese wird das Reaktionsmoment des Getriebes übertragen.

Nach einer weiteren bevorzugten Ausführungsform weist das Adapterelement zwei abragende Stützarme auf, an denen die Lagerstellen angeordnet sind. Die Drehmomentstütze ist zwischen den beiden parallel zueinander angeordneten Stützarmen angeordnet und durchgreift die Lücke zwischen den beiden Stützarmen, wodurch sich eine Bauraum sparende Anordnung ergibt.

Nach einer weiteren bevorzugten Ausführungsform weist die Drehmomentstütze ein getriebeseitiges Gelenk mit einer Gelenkachse auf, an welcher die Lagerstellen der Stützarme abstützbar sind, und zwar in beiden Drehrichtungen des auf das Getriebe wirkenden Reaktionsmoments. Die Drehmomentstütze ist somit gegenüber dem Getriebegehäuse gelenkig befestigt und kann Schwenkbewegungen ausführen. Die Drehmomentstütze weist ein weiteres, drehgestellseitiges Gelenk auf, über welches das Reaktionsmoment am Drehgestell abgestützt wird.

Nach einer weiteren bevorzugten Ausführungsform sind die Stützarme an der Gelenkachse fixierbar, insbesondere verschraubbar, d.h. lösbar verbunden.

Nach einer weiteren bevorzugten Ausführungsform weist das Adapterelement - zusätzlich zu den beiden Stützarmen - ein Sicherheits- oder Notfangelement auf, welches vorzugsweise als abragender Fangarm ausgebildet ist. Im Schadensfalle, beispielsweise beim Bruch der Drehmomentstütze wird das Getriebe über das Notfangelement in einer geeigneten Fangvorrichtung am Drehgestell aufgefangen, damit die Folgen eines solchen Schadensfalles begrenzt bleiben.

Nach einer weiteren bevorzugten Ausführungsform ist das Adapterelement als eine Adapterplatte ausgebildet, welche mit dem Getriebegehäuse verbunden ist. Dabei können sowohl die Stützarme als auch das Notfangelement an der Adapterplatte angeordnet, vorzugsweise einstückig mit der Adapterplatte verbunden sein. Somit muss nur ein Adapterelement am Getriebegehäuse montiert werden.

Nach einer weiteren bevorzugten Ausführungsform kann das Adapterelement geteilt sein, und zwar in eine erste Adapterplatte mit den Stützarmen und eine zweite Adapterplatte mit dem Notfangelement. Beide Adapterplatten werden somit separat montiert und am Getriebegehäuse befestigt.

Nach einer weiteren bevorzugten Ausführungsform ist das Adapterelement bzw. sind die Adapterplatten als Gussteile ausgebildet. Daraus ergibt sich der Vorteil, dass die Stützarme und das Notfangelement an die Adapterplatte angeformt und somit in einem Arbeitsgang hergestellt werden können. Das Gussteil muss lediglich an einer Fläche, über welche es mit dem Getriebegehäuse verbunden wird, bearbeitet werden.

Nach einer weiteren bevorzugten Ausführungsform ist das Adapterelement mit dem Getriebegehäuse verschraubbar. Damit wird eine lösbare Verbindung zwischen Adapterelement bzw. Adapterplatte und dem Getriebegehäuse hergestellt, sodass ein Austausch des Adapterelements ohne großen Montageaufwand möglich ist.

Nach einer weiteren bevorzugten Ausführungsform weist das Getriebegehäuse eine Montagefläche auf, an welcher das Adapterelement oder die Adapterplatten befestigt werden können. Die Montagefläche ist eine bearbeitete Fläche, da das Getriebegehäuse als Gussteil mit einer Gusshaut ausgebildet ist. Das mit dem Getriebegehäuse zu fügende Adapterelement weist eine korrespondierende, bearbeitete Montagefläche auf, welche kraftschlüssig infolge der Verschraubung mit dem Getriebegehäuse gefügt wird. Zur genaueren Positionierung können Passelemente wie Passstifte oder Passfedern vorgesehen werden.

Nach einer weiteren bevorzugten Ausführungsform kann zwischen den beiden Montageflächen von Adapterelement und Getriebegehäuse eine Distanzplatte angeordnet und eingespannt werden. Durch die Distanzplatte, die eine variable Stärke aufweist, können kleine Abstandsdifferenzen überbrückt werden, ohne dass dafür ein neues Adapterelement benötigt würde.

Nach einem weiteren Aspekt der Erfindung ist bei einer Anordnung zur Abstützung eines Getriebes in einem Drehgestell eines Schienenfahrzeuges vorgesehen, dass das Getriebe ein Getriebegehäuse wie oben beschrieben, d. h. mit einem Adapterelement aufweist. Mit dem Adapterelement wird der Vorteil erreicht, dass unterschiedliche Getriebe mit demselben Getriebegehäuse an unterschiedliche Schnittstellen oder Abmessungen im Drehgestell angepasst und über eine Drehmomentstütze abgestützt werden können. Damit ergeben sich Kostenvorteile für die Herstellung der Getriebe, da keine neuen Getriebegehäuse notwendig werden.

Nach einer weiteren bevorzugten Ausführungsform wird das Getriebe über das Adapterelement und eine Drehmomentstütze abgestützt, d.h. das Reaktionsmoment des Getriebes, welches aus der Differenz des Getriebeantriebsmomentes und des Getriebeabtriebsmomentes resultiert, wird über das Adapterelement und die Drehmomentstütze am Drehgestell abgestützt.

Nach einer weiteren bevorzugten Ausführungsform wird das Getriebe über das Sicherheits- oder Notfangelement beim Bruch eines sicherheitsrelevanten Teils am Drehgestell aufgefangen, welches über eine entsprechende Fangvorrichtung zur Aufnahme des Notfangselements verfügt.

Ausführungsbeispiele der Erfindung sind in der Zeichnung dargestellt und werden im Folgenden näher beschrieben, wobei sich aus der Beschreibung und/oder der Zeichnung weitere Merkmale und/oder Vorteile ergeben können. Es zeigen
- Fig. 1: ein Getriebe mit Getriebegehäuse und erfindungsgemäßem Adapterelement in einer Ansicht in axialer Richtung der Getriebewellen,
- Fig. 2: das Getriebe gemäß Fig. 1 in einer perspektivischen Darstellung mit linker und rechter Achswelle,
- Fig. 3: das Getriebe mit Getriebegehäuse und angelenkter Drehmomentstütze in einer Seitenansicht,
- Fig. 4: das Getriebe gemäß Fig. 3 in einer Ansicht in Richtung des Pfeils A (von links),
- Fig. 5: das Getriebe gemäß Fig. 3 in einer Ansicht in Richtung des Pfeils B (von rechts),
- Fig. 6: ein weiteres Ausführungsbeispiel der Erfindung mit einer Distanzplatte zwischen Adapterelement und Getriebegehäuse und
- Fig. 7: das Adapterelement in einstückiger Ausführung am Getriebegehäuse.

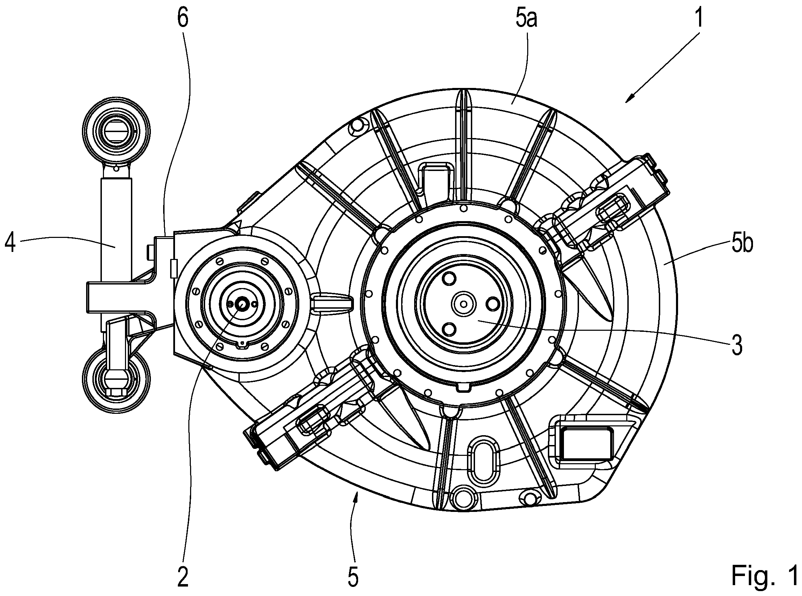

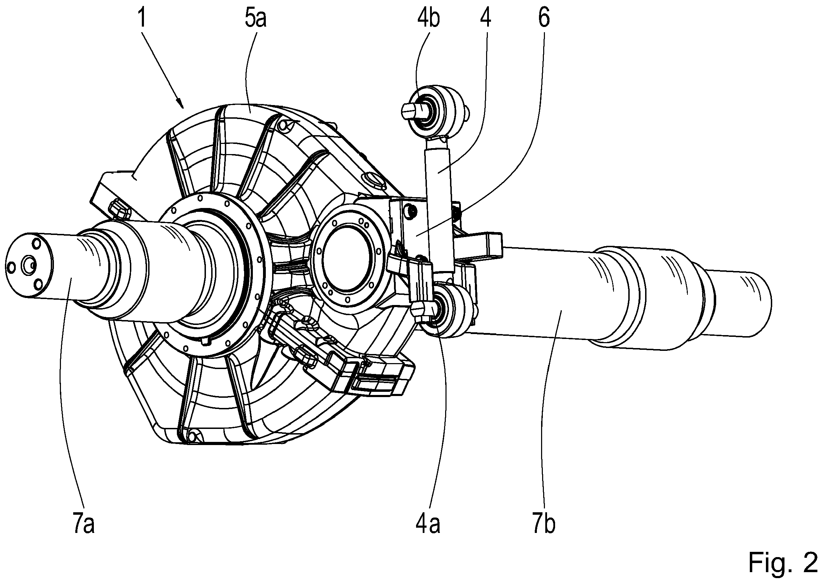

Fig. 1 zeigt ein Getriebe 1 für ein Schienenfahrzeug mit einer Getriebeeingangswelle 2 und einer Getriebeausgangswelle 3. Die Getriebeeingangswelle 2 wird von einem nicht dargestellten Fahrmotor angetrieben, die Getriebeausgangswelle 3 treibt eine in Fig. 2 dargestellte Achswelle eines Radsatzes eines Drehgestells des Schienenfahrzeuges an. Das Getriebe 1 ist als Stirnradstufe zur Untersetzung der Motordrehzahl auf die Achswellendrehzahl ausgebildet, wobei auf der Getriebeeingangswelle 2 ein Ritzel und auf der Getriebeausgangswelle 3 ein Großrad angeordnet sind. Aufgrund der unterschiedlichen Drehmomente auf der Antriebs- und der Abtriebsseite des Getriebes 1 wirkt auf das Getriebe 1 ein Reaktionsmoment, welches über eine Drehmomentstütze 4 abgefangen wird. Das Getriebe 1 weist ein Getriebegehäuse 5 auf, welches in ein oberes Gehäuseteil 5a und ein unteres Gehäuseteil 5b geteilt ist. An dem oberen Gehäuseteil 5a ist ein Adapterelement 6 befestigt, an welchem die Drehmomentstütze 4 zur Abstützung des Reaktionsmomentes des Getriebes 1 angelenkt ist.

Fig. 2 zeigt das Getriebe 1 mit Drehmomentstütze 4 und Adapterelement 6 gemäß Fig. 1, jedoch in einer perspektivischen Darstellung mit einer linken Achswelle 7a und einer rechten Achswelle 7b zum Antrieb eines nicht dargestellten Radsatzes des Drehgestells. Die Drehmomentstütze 4 weist ein unteres Gelenk mit einer unteren Gelenkachse 4a, welche mit dem Adapterelement 6 verbunden ist, sowie ein oberes Gelenk mit einer oberen Gelenkachse 4b, welche am nicht dargestellten Drehgestell abgestützt ist, auf.

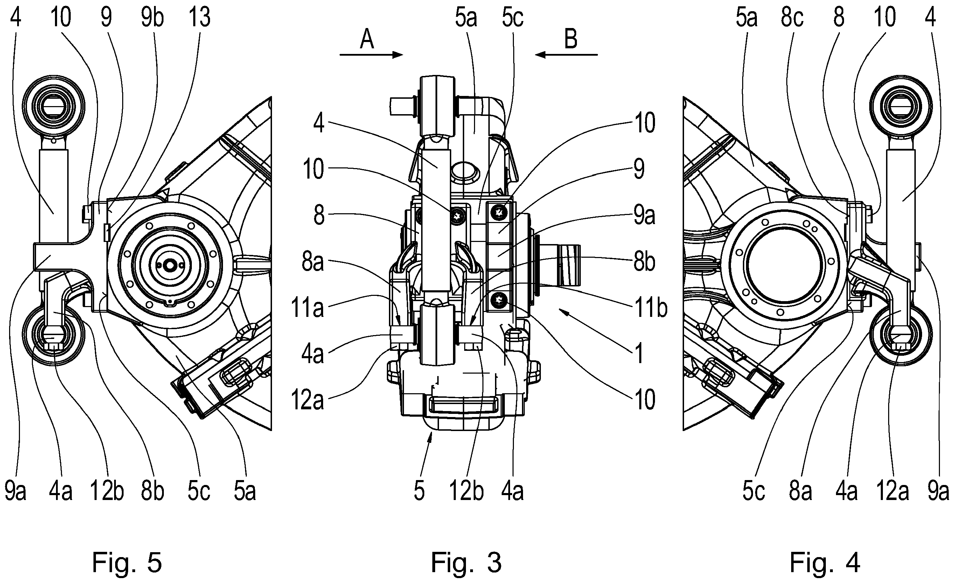

Fig. 3 zeigt das Getriebe 1 mit Getriebegehäuse 5 in einer Seitenansicht, wobei für gleiche Teile gleiche Bezugszahlen wir in Fig. 1 und Fig. 2 verwendet werden. Das in Fig. 1 und Fig. 2 dargestellte, einstückig ausgebildete Adapterelement 6 ist in Fig. 3 in einer Variante als geteiltes Adapterelement dargestellt und umfasst eine erste Adapterplatte 8 sowie eine zweite Adapterplatte 9, welche jeweils mit dem Gehäuse 5, insbesondere dem oberen Gehäuseteil 5a mittels Befestigungsschrauben 10 kraftschlüssig verbunden sind.

Fig. 4 zeigt eine Ansicht in Richtung des Pfeils A (von links) und Fig. 5 zeigt eine Ansicht in Richtung des Pfeils B (von rechts) jeweils auf den Teil des Getriebegehäuses 5, an welchem die erste Adapterplatte 8, welche an die Drehmomentstütze 4 angelenkt ist, und die zweite Adapterplatte 9 befestigt sind. Wie Fig. 3 zeigt, weist die erste Adapterplatte 8 zwei Stützarme 8a, 8b auf, welche beiderseits der Drehmomentstütze 4 angeordnet sind und an ihren freien Enden Lagerstellen 11a, 11b zur Verbindung mit der Gelenkachse 4a der Drehmomentstütze 4 aufweisen. Die Lagerstellen 11a, 11b sind - wie auch aus den Figuren 4 und 5 hervorgeht - als ebene Flächen ausgebildet, welche auf korrespondierenden Abflachungen der Gelenkachse 4a aufliegen. Die Gelenkachse 4a ist mit den beiden Stützarmen 8a, 8b jeweils durch Schrauben 12a, 12b verbunden, sodass die Gelenkachse 4a mit ihren Enden an den beiden Stützarmen 8a, 8b fest eingespannt ist. Die zweite Adapterplatte 9 weist ein Sicherheits- oder Notfangelement 9a auf, welches - in der Zeichnung - als waagerecht abstehender Fangarm 9a mit einem quadratischen Querschnitt, also mit hinreichender Festigkeit ausgebildet ist. Das Gehäuse 5, insbesondere das obere Gehäuseteil 5a weist eine Montagefläche 5c auf, welche als ebene, vorzugsweise Span gebend bearbeitete Anlagefläche 5c für die erste und die zweite Adapterplatte 8, 9 vorgesehen ist. Beide Adapterplatten 8, 9 weisen entsprechend bearbeitete Gegen- oder Anlageflächen 8c, 9b auf, sodass eine maßgenaue Verbindung zwischen dem Getriebegehäuse 5 und den beiden Adapaterplatten 8, 9 durch die Verschraubung hergestellt werden kann. Um eine genauere Positionierung der beiden Adapterplatten 8, 9 gegenüber dem oberen Gehäuseteil 5a sicherzustellen, sind Fixierungselemente, z.B. in Form einer Passfeder 13 vorgesehen.

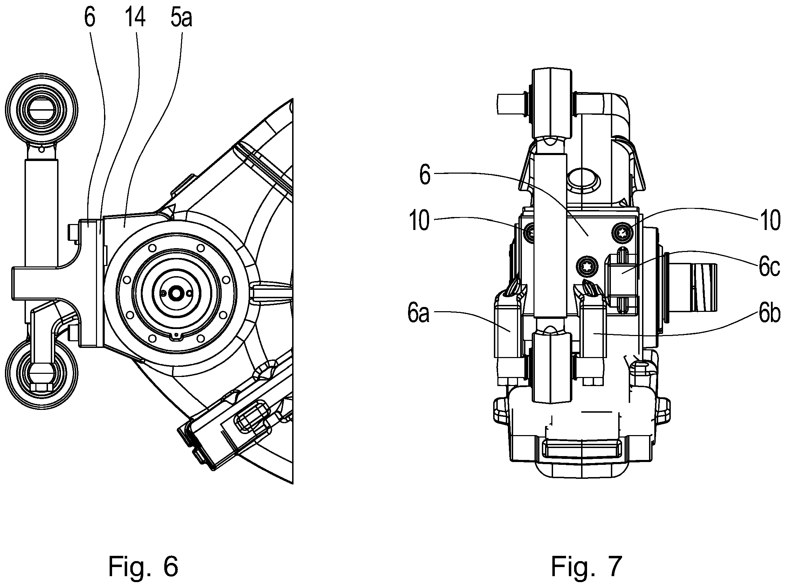

Fig. 6 zeigt eine weitere Ausführungsform der Erfindung, wobei für gleiche Teile gleiche Bezugszahlen wie zuvor verwendet werden. Zwischen dem Adapterelement 6 (oder den Adapterplatten 8, 9) und der Montagefläche 5c des oberen Gehäuseteils 5a ist ein Distanzelement 14 in Form einer Distanzplatte oder -scheibe 14 oder mehreren Distanzblechen angeordnet, welche zusammen mit dem Adapterelement 6 mit dem oberen Gehäuseteil 5a verschraubt werden. Mittels der Distanzscheibe 14, die in verschiedenen Dicken vorgehalten werden kann, können Differenzen der Anschlussmaße oder Schnittstellen im Drehgestell überbrückt werden.

Fig. 7 zeigt das einstückig ausgebildete Adapterelement 6, welches über Schrauben 10 fest mit dem Getriebegehäuse 5 verbunden ist und sowohl zwei Stützarme 6a, 6b als auch ein Notfangelement 6c in Form eines Fangarmes 6c aufweist. Das einstückige Adapterelement 6 wird vorzugsweise als Gussteil hergestellt, wobei die beiden Stützarme 6a, 6b und der Fangarm 6c angeformt sind.

Das Adapterelement (6, 8, 9) kann - abweichend von den oben beschriebenen und in der Zeichnung dargestellten Ausführungsbeispielen - auch dahingehend abgewandelt werden, dass es das Getriebegehäuse 5 an dessen Oberseite und/oder an dessen Unterseite umgreift, womit ein Formschluss zwischen Getriebegehäuse und Adapterelement hergestellt würde.

### Bezugszeichen

- 1: Getriebe
- 2: Getriebeeingangswelle
- 3: Getriebeausgangswelle
- 4: Drehmomentstütze
- 4a: Gelenkachse, unten
- 4b: Gelenkachse, oben
- 5: Getriebegehäuse
- 5a: oberes Gehäuseteil
- 5b: unteres Gehäuseteil
- 5c: Montagefläche
- 6: Adapterelement (einstückig)
- 6a: Stützarm, links
- 6b: Stützarm, rechts
- 6c: Fangarm
- 7a: Achswelle, links
- 7b: Achswelle, rechts
- 8: erste Adapterplatte
- 8a: Stützarm, links
- 8b: Stützarm, rechts
- 8c: Anlagefläche
- 9: zweite Adapterplatte
- 9a: Notfangelement/Fangarm
- 9b: Anlagefläche
- 10: Schraube
- 11a: Lagerstelle, links
- 11b: Lagerstelle, rechts
- 12a: Befestigungsschraube, links
- 12: Befestigungsschraube, rechts
- 13: Passfeder
- 14: Distanzelement/Distanzplatte
- A: Pfeil, Ansicht von links
- B: Pfeil, Ansicht von rechts

## Patentansprüche

1. Getriebegehäuse eines Getriebes (1) für ein Schienenfahrzeug, wobei das Getriebegehäuse (5) mittels einer Drehmomentstütze (4) am Schienenfahrzeug, insbesondere an einem Drehgestell des Schienenfahrzeuges abstützbar ist, **dadurch gekennzeichnet, dass** an dem Getriebegehäuse (5) ein Adapterelement (6, 8, 9) befestigt ist, welches an der Drehmomentstütze (4) anlenkbar ist.

2. Getriebegehäuse nach Anspruch 1, **dadurch gekennzeichnet, dass** das Adapterelement (6, 8) zwei Lagerstellen (11a, 11b) für die Drehmomentstütze (4) aufweist.

3. Getriebegehäuse nach Anspruch 2, **dadurch gekennzeichnet, dass** das Adapterelement (6, 8) zwei abragende Stützarme (6a, 6b, 8a, 8b) aufweist, an deren freien Enden die Lagerstellen (11a, 11b) angeordnet sind.

4. Getriebegehäuse nach Anspruch 2 oder 3, **dadurch gekennzeichnet, dass** die Drehmomentstütze (4) ein getriebeseitiges Gelenk mit einer Gelenkachse (4a) aufweist und dass die Stützarme (6a, 6b, 8a, 8b) über die Lagerstellen (11a, 11b) an der Gelenkachse (4a) in beiden Drehrichtungen abstützbar sind.

5. Getriebegehäuse nach Anspruch 4, **dadurch gekennzeichnet, dass** die Stützarme (6a, 6b, 8a, 8b) an der Gelenkachse (4a) fixierbar, insbesondere mit der Gelenkachse (4a) verschraubbar sind.

6. Getriebegehäuse nach einem der Ansprüche 1 bis 5, **dadurch gekennzeichnet, dass** das Adapterelement (6, 9) ein Sicherheits- oder Notfangelement (6c, 9a) aufweist.

7. Getriebegehäuse nach Anspruch 6, **dadurch gekennzeichnet, dass** das Sicherheits- oder Notfangelement (6c, 9a) als von dem Adapterelement (6, 9) abragender Fangarm (6c, 9a) ausgebildet ist.

8. Getriebegehäuse nach einem der vorhergehenden Ansprüche, **dadurch gekennzeichnet, dass** das Adapterelement als eine Adapterplatte (6) ausgebildet ist.

9. Getriebegehäuse nach einem der Ansprüche 3 bis 7, **dadurch gekennzeichnet, dass** das Adapterelement zwei separate Adapterplatten (8, 9) umfasst, wobei eine erste Adapterplatte (8) die Stützarme (8a, 8b) zur Abstützung gegenüber der Drehmomentstütze (4) und eine zweite Adapterplatte (9) das Sicherheits- oder Notfangelement (9a) aufweisen.

10. Getriebegehäuse nach einem der Ansprüche 1 bis 9, **dadurch gekennzeichnet, dass** das Adapterelement (6) respektive die Adapterplatten (8, 9) als Gussteile ausgebildet sind.

11. Getriebegehäuse nach einem der Ansprüche 1 bis 10, **dadurch gekennzeichnet, dass** das Adapterelement (6) respektive die Adapterplatten (8, 9) mit dem Getriebegehäuse (5) verschraubbar sind.

12. Getriebegehäuse nach Anspruch 9, 10 oder 11, **dadurch gekennzeichnet, dass** das Getriebegehäuse (5, 5a) eine Montagefläche (5c) aufweist, an welcher das Adapterelement (6), eine Adapterplatte (8, 9) oder zwei Adapterplatten (8, 9) befestigbar, insbesondere verschraubbar sind.

13. Getriebegehäuse nach Anspruch 12, **dadurch gekennzeichnet, dass** zwischen der Montagefläche (5c) des Getriebegehäuses (5) und dem Adapterelement (6) der Adapterplatte (8) oder den Adapterplatten (8, 9) ein Distanzelement (14), insbesondere mindestens eine Distanzplatte (14) angeordnet ist.

14. Anordnung zur Abstützung eines Getriebes (1) im Drehgestell eines Schienenfahrzeuges, wobei das Getriebe (1) über eine Drehmomentstütze (4) gegenüber dem Drehgestell abstützbar ist, **dadurch gekennzeichnet, dass** das Getriebe (1) ein Getriebegehäuse (5) nach einem der vorhergehenden Ansprüche aufweist.

15. Anordnung nach Anspruch 14, **dadurch gekennzeichnet, dass** das Getriebe (1) über das Adapterelement (6) respektive die Adapterplatte (8) an der Drehmomentstütze (4) anlenkbar ist.

16. Anordnung nach Anspruch 14 oder 15, **dadurch gekennzeichnet, dass** das Getriebe (1) über das Sicherheits- oder Notfangelement (6c, 9a) am Drehgestell auffangbar ist.
